# EUROPEAN PATENT APPLICATION

(11) **EP 1 565 022 A2**
(43) Date of publication of application: **17.08.2005**
(21) Application number: 05002830.7
(22) Date of filing: 10.02.2005
(51) Int. Cl.: H04Q 7/38

(54) **Method of resuming header decompression in a multimedia broadcast/mulitcast service system**

(30) Priority: 12.02.2004 KR 2004009396
(71) Applicant: Samsung Electronics Co., Ltd., Suwon-si, Gyeonggi-do (KR)
(72) Inventor: Kim, Soeng-Hun, Yeongtong-gu, Suwon-si, Gyeonggi-do (KR); Van Lieshout, Gert Jan, Yeongtong-gu, Suwon-si, Gyeonggi-do (KR)
(74) Representative: Grünecker, Kinkeldey, Stockmair & Schwanhäusser Anwaltssozietät

(57) **Abstract**

A method of resuming header decompression in a UE after the UE moves from one cell to another sharing the same header decompressor and header decompression context during an MBMS service in an MBMS system is provided. After moving from the old cell to the new cell, the UE suspends header decompression until receiving an IR-DYN packet from the new cell. Upon receipt of the IR-DYN packet, the UE updates the dynamic part of the header decompression context using the IR-DYN packet and resumes the header decompression using the updated header decompression context in the new cell.

## Description

### BACKGROUND OF THE INVENTION

### 1. Field of the Invention

The present invention relates generally to an MBMS (Multimedia Broadcast/Multicast Service) mobile communication system, and in particular, to a method of decompressing a compressed header in MBMS packet data.

### 2. Description of the Related Art

Although it is based on the GSM (Global System for Mobile communication) and GPRS (General Packet Radio Services) standards, UMTS (Universal Mobile Telecommunication Service) uses WCDMA (Wideband Code Division Multiple Access) technology, unlike GSM which uses TDMA (Time Division Multiple Access). The UMTS system provides a uniform service that transmits packetized text, digital voice and video, and multimedia data at a 2Mbps or higher rate to mobile subscribers or computer users around the world wherever they are. With the introduction of the concept of virtual access, UMTS allows access to any end point in a network at any time. Virtual access refers to packet-switched access using a packet protocol like IP (Internet Protocol).

Due to limited radio resources, individual transmission of high-speed data to UEs (User Equipments) is inefficient. For example, to provide a 64-kbps video streaming service to a UE, a dedicated channel is established for the UE and radio resources supporting 64kbps are allocated to the UE. If the number of such UEs is *n*, the requirement of radio resources is increased by *n* times.

As a solution to the above problem, if a plurality of UEs request the same service, the service can be provided to them on a common channel. Regardless of the number of UEs requesting the same service within a cell, the service can be provided to them on a common channel using the same radio resources, thereby leading to efficient use of radio resources. In this context, MBMS was developed to efficiently send the same data to a plurality of UEs in the UMTS communication system. The MBMS is favorable to multimedia data transmission requiring a large volume of radio resources. Aside from the high-speed multimedia service, the MBMS finds its use in many applications. As a result, much development and study has been conducted on MBMS applications.

Packet-based multimedia service is provided generally by RTP/UDP/IP (Realtime Transport Protocol/User Datagram Protocol/Internet Protocol). With the use of this protocol combination, the length of a header attached to one packet is 60 bytes or more. To reduce the volume of radio resources used, the header needs to be compressed. The MBMS adopted ROHC (Robust Header Compression) for header compression. A PDCP (Packet Data Control Protocol) entity taking charge of a PDCP-called layer protocol performs header compression and decompression in both a UE and a system. On the part of the system, the PDCP entity exists in an RNC (Radio Network Controller) that manages a plurality of cells.

As stated earlier, since UEs requesting the same MBMS service may be distributed across different cells, MBMS data must be sent to all the cells. In this case, it is very inefficient to configure a PDCH entity for each cell to provide the MBMS service. The MBMS data delivered from a higher-layer network to the RNC is processed in the same manner in PDCP entities corresponding to the cells, in real implementation. As a result, a technique of sharing one PDCP entity among a plurality of cells for one MOMS service has been developed.

If a UE moves from one cell to another and both cells share the same PDCP entity, the UE reuses the PDCP entity used for the old cell without configuring a new PDCP entity for the new cell. The reuse of the PDCP entity amounts to immediate resumption of header decompression in the new cell.

The immediate resumption of header decompression in the new cell may prevent the PDCP entity from recognizing a probable header decompression failure. Although the old cell and the new cell share the same PDCP entity, a probable transmission difference between the two cells may lead to a header decompression failure in the UE. For example, lost packets may be involved between the last packet received from cell 1 and the first packet received from cell 2. The packet loss causes synchronization loss to the UE.

It can be determined using a 3-bit CRC (Cyclic Redundancy Code) inserted in an ROHC header whether header decompression has been successful or failed. A header compressor within a PDPC entity on a transmitting side performs a CRC operation on a header field to be compressed before header compression and then attaches the resulting CRC value to a packet with a compressed header, prior to transmission. A header decompressor within a PDCP entity on a receiving side decompresses the header of the received packet, performs a CRC operation on the decompressed header, and determines whether the header decompression is successful by comparing the CRC operation result with the received CRC.

Considering that the CRC is merely 3 bits, the recognition of header decompression failure is likely to be elusive to the UE, if header decompression fails. Thus, if the UE delivers the wrong header data to a higher layer, mistaking the header decompression failure for a successful header decompression, the user gets distorted data.

As described above, in the conventional MBMS system, when a UE moves from one cell to another, it is vulnerable to packet loss. The packet loss has serious effects in a system using header compression. Accordingly, a need exists for a method of preventing delivery of distorted data to a user as a result of failed header decompression when a UE moves between cells.

### SUMMARY OF THE INVENTION

An object of the present invention is to substantially solve at least the above problems and/or disadvantages and to provide at least the advantages below. Accordingly, an object of the present invention is to provide a method of preventing a header decompression failure in a UE which has moved from one cell to another, both cells sharing the same PDCP entity in an MBMS system.

Another object of the present invention is to provide a method of preventing delivery of distorted data to a user in the case where a UE fails in header decompression after it moves from one cell to another, both cells sharing the same PDCP entity in an MBMS system.

A further object of the present invention is to provide a method of suspending header decompression until receipt of an Initialization-Refresh Dynamic (IR-DYN) packet from a new cell in a UE that has moved from an old cell to the new cell.

Still another object of the present invention is to provide a header decompression resuming method in which a UE, which has moved from an old cell to another cell, receives an IR-DYN packet from the new cell, updates the dynamic context of a header decompression context using the IR_DYN packet, and resumes header decompression using the updated header decompression context in the new cell.

The above objects are achieved by providing a method of resuming header decompression in a UE after the UE moves from one cell to another sharing the same header decompressor and header decompression context during an MBMS service in an MBMS system.

According to one aspect of the present invention, in a method of resuming header decompression in a UE in an MBMS mobile communication system, the UE moves from an old cell to a new cell while receiving an MBMS service, awaits receipt of an IR-DYN packet for header decompression of packet data for the MBMS service, before resuming header decompression in the new cell, updates a header decompression context used for the old cell using the IR-DYN packet, upon receipt of the IR-DYN packet, and decompresses a header of packet data for the MBMS service received from the new cell using the updated header decompression context.

### BRIEF DESCRIPTION OF THE DRAWINGS

The above and other objects, features and advantages of the present invention will become more apparent from the following detailed description when taken in conjunction with the accompanying drawings in which:
FIG. 1 illustrates the configuration of an MBMS mobile communication system;
FIG. 2 is a diagram illustrating a hierarchical interface architecture for transmission of data and signaling messages between a UE and an RNC according to a preferred embodiment of the present invention;
FIG. 3 is a diagram describing an inter-cell movement of a UE that receives an MBMS service in an MBMS communication system; and
FIG. 4 is a flowchart illustrating an operation for resuming an MBMS service in a UE after the UE moves from one cell to another according to a preferred embodiment of the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention is intended to enable a UE to update a header decompression context in a new cell after it moves from an old cell to the new cell, both cells sharing the same header decompressor and header decompression context, to thereby cope with packet loss which may occur during movement to the new cell.

A description will be made first of an MBMS service to which the present invention is applied.

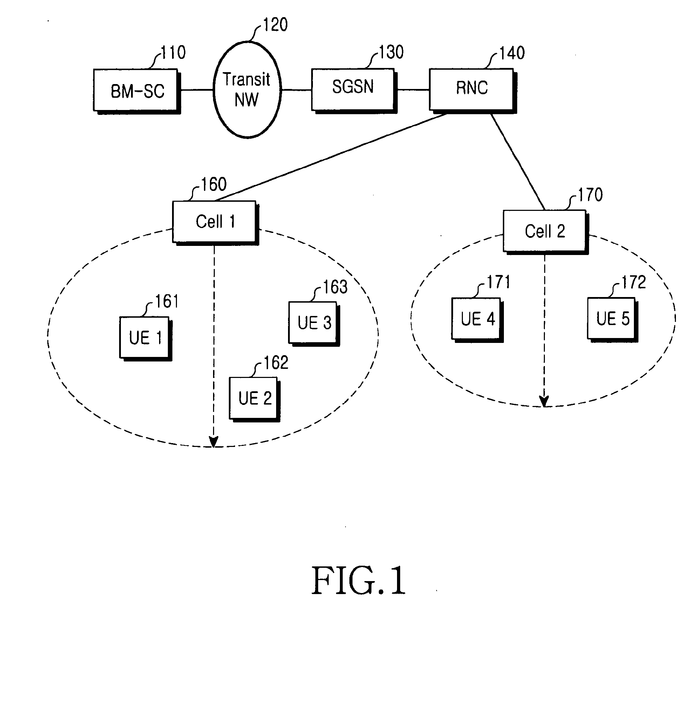

FIG. 1 illustrates the configuration of an MBMS mobile communication system. The MBMS mobile communication system is shown to be a 3^{rd} generation asynchronous mobile communication system or a 3GPP system in which the MBMS service is deployed, by way of example.

Referring to FIG. 1, UEs 161, 162, 163, 171 and 172 (UE 1 to UE 5) are terminals or subscribers capable of receiving the MBMS service. Cells 160 and 170 (cell 1 and cell 2) are Node B devices for sending MBMS data to the UEs. As illustrated, only one radio channel is established for the MBMS service between cell 1 and the UEs 161, 162 and 163. An RNC 140 controls a plurality of cells. It sends multimedia data selectively to cells and controls a radio channel established to provide the MBMS service.

An SGSN (Serving GPRS Supporting Node) 130 controls MBMS services for subscribers. Above all things, the SGSN 130 manages service billing data for individual subscribers and selectively sends multimedia data to RNCs. A transit network (NW) 120 provides a communication path between a BM-SC (Broadcast/Multicast Service Center) 110 and the SGSN 130. The transit NW 120 can be configured to include a GGSN (Gateway GPRS Support Node) and an external network. The 13M-SC 110 is a source of MBMS data. It is responsible for data scheduling for each service.

An MBMS data stream is delivered to UE 1 to UE 5 via the transit NW 120, the SGSN 130, the RNC 140, and the cells 160 and 170. While not shown, a plurality of SGSNs may be involved in one MBMS service, and a plurality of RNCs for each SGSN. Each SGSN sends data selectively to the RNCs and each RNC sends data selectively to cells. To do so, lists of the destinations of data streams are stored. Specifically, an RNC list is stored in an SGSN and a cell list in an RNC. MBMS data is sent selectively to the destinations.

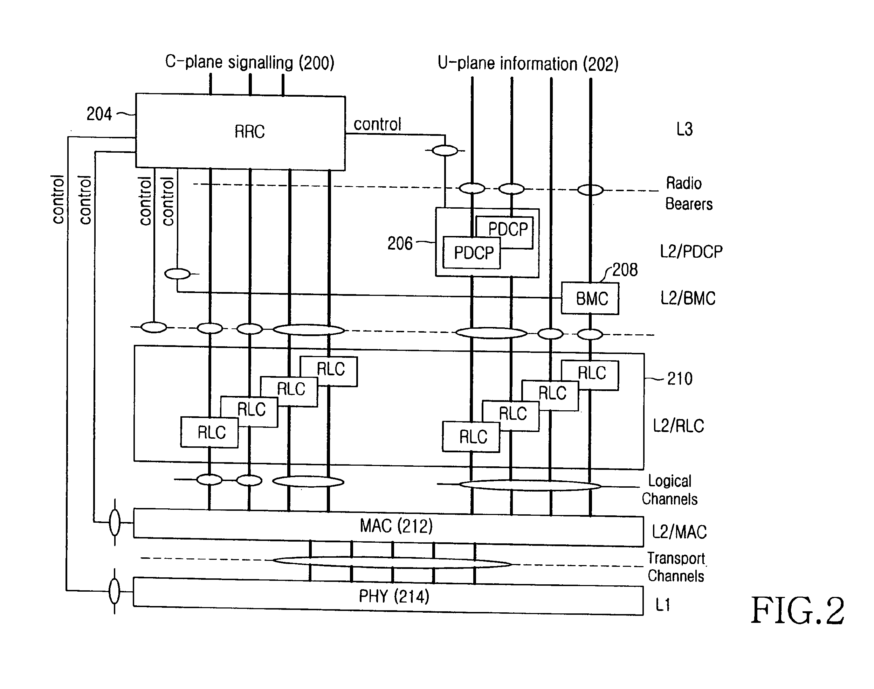

FIG. 2 illustrates a hierarchical protocol architecture of a Uu interface for transmission of data and signaling messages between a UE and an RNC. The Uu interface is divided into a control plane (C-plane) for exchanging control signals between the UE and the RNC and a user plane (U-plane) for transmitting actual data between them.

Referring to FIG. 2, C-plane signaling 200 is processed through an RRC (Radio Resource Control) entity 204, an RLC (Radio Link Control) entity 210, a MAC (Medium Access Control) entity 212, and a PHY (PHYsical) entity 214. U-plane information 202 is processed through a PDCP entity 206, a BMC (Broadcast/Multicast Control) entity 208, the RLC entity 210, the MAC entity 212, and the PHY entity 214. Typically, the PHY entity 214 is defined in each cell, and the MAC entity 212 through the RRC entity 204 are defined in each RNC.

The PHY entity 214 provides an information delivery service by a radio transfer technology. It corresponds to layer 1 (LI) in an OSI (Open Systems Interconnection) model. The PHY entity 214 is connected to the MAC entity 212 by transport channels. The mapping relationship between the transport channels and physical channels is determined according to how data is processed in the PHY layer.

The MAC entity 212 is connected to the RLC entity 210 by logical channels. The MAC entity 212 delivers data received from the RLC entity 210 to the PHY entity 214 on appropriate transport channels. It also delivers data received from the PHY entity 214 on transport channels to the RLC entity 210 on appropriate logical channels. The MAC entity 212 inserts additional information into data received on logical channels or transport channels, or interprets inserted additional information and performs the appropriate corresponding operation. It also controls random access.

The RLC entity 210 takes charge of the establishment and release of the logical channels. The RLC entity 210 operates in one of an acknowledged mode (AM), an unacknowledged mode (UM), and a transparent mode (TM). It provides different functionalities in each mode. Typically, the RLC entity 210 segments or concatenates SDUs (Service Data Units) received from an upper layer to an appropriate size and corrects errors by ARQ (Automatic Repeat request).

The PDCP entity 206 is positioned above the RLC entity 210 on the U-plane. The PDCP entity 206 is responsible for compression and decompression of the header of data taking form of an IP packet and lossless data delivery under the situation that an RNC for providing service to a particular UE is changed due to the UE's mobility. While for a general service, the PDCP entity 206 performs lossless SRNC (Serving RNC) relocation support and header compression, it does not need to support the lossless SRNC relocation in view of the nature of broadcasting/multicasting, for an MBMS service. The SRNC relocation is a process in which a UE, which has moved from an SRNC to another RNC, designates the new RNC as a new SRNC. The BMC entity 208 is positioned above the RLC entity 210. It supports a broadcast service by broadcasting the same data to an indefinite number of UEs in a certain cell.

In the process of call setup for a specific service, the RNC configures entities for operating based on the PDCP/RLC/MAC/PHY layer protocols. A set of such configured protocol entities is called a radio bearer (RB). The entities can be configured to be blocks implemented by software. Access points between the protocol entities are called SAPs (Service Access Points). For example, an access point between the PDCP 206 and the RLC 210 is called an RLC SAP. Through the RLC SAP, the PDCP delivers user data, that is, primitives such as RLC-DATA-REQ to the RLC.

The RRC entity 204 is responsible for the establishment and release of RBs between the RNC and UEs. The RRC entity 204 manages radio resources to UEs in an RRC connected mode, manages the UEs' mobility, and sends signals from a CN to the UEs.

To provide a service to UEs, information required to provide the service, that is, contexts are generated between the UEs and network nodes such as an RNC and an SGSN. The contexts include a UE context and an MM (Mobility Management) context. Especially for UEs requesting an MBMS service, network nodes associated with the MBMS service use MBMS service contexts. Because the same information is delivered to a plurality of UEs at the same time in an MBMS service, an MBMS service context is not produced for each of the UEs, but for each MBMS service or for each MBMS session. Particularly for the operation of the PDCP layer for header compression and decompression, the same header compression/decompression context is provided between a UE and an RNC.

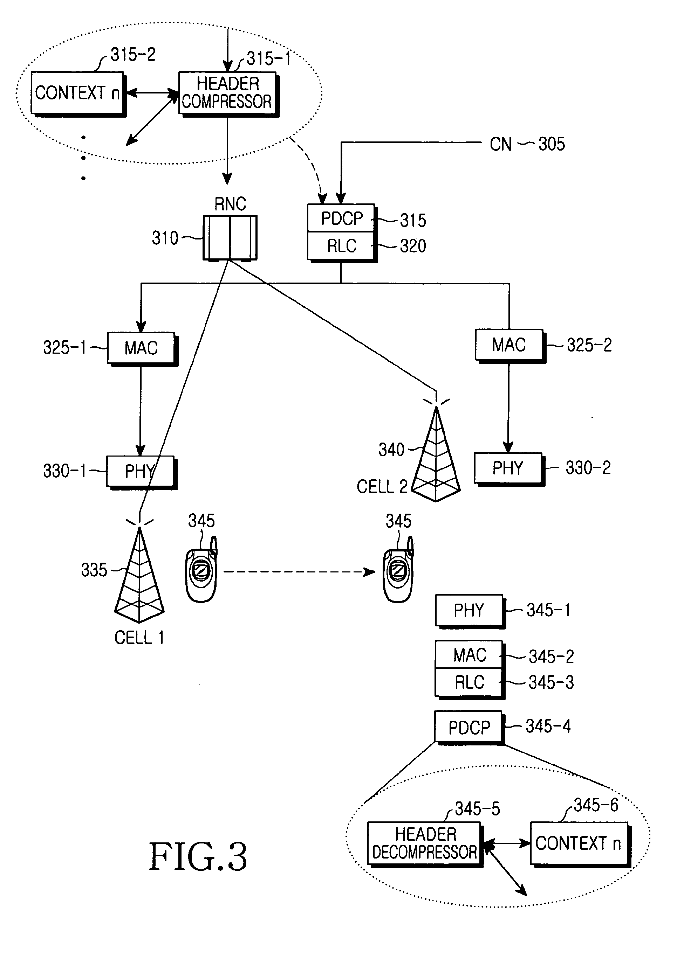

FIG. 3 is a diagram describing an inter-cell movement of a UE that receives an MBMS service in an MBMS communication system. In the illustrated case, an RNC 310 has a plurality of cells including cells 335 and 340 (cell 1 and cell 2). A UE 345 moves from cell 1 to cell 2, while continuing to receive an MBMS service.

Referring to FIG. 3, a network that provides the MBMS service is comprised of a CN 305, the RNC 310, and the cells 335 and 340. The RNC 310 converts data received from the CN 305 to a form suitable to be transmitted on a radio channel, and sends the data to each cell. For this purpose, the RNC 310 is provided with a PDCP entity 315, an RLC entity 320, and MAC entities 325-1 and 325-2.

The RLC entity 320 segments or concatenates data received from a higher layer to a size suitable for transmission on the radio channel and inserts sequence numbers into data. The RLC entity 320, which supports one MBMS service, is shared among a plurality of cells or configured for each cell. The MAC entities 325-1 and 325-2 insert identifiers (IDs) that identify a plurality of services on one radio channel into a MAC layer header for packet data. A MAC entity is configured on a cell basis.

The PDCP entity 315 compresses a header for packet data received from the CN 305 in a predetermined compression method and provides the packet data with the compressed header to the RLC layer 320. For the header compression, the PDCP entity 315 is provided with a header compressor 315-1 and a context 315-2 having information required for header compression. A header compression scheme for the MBMS service, ROHC will be briefly described below.

MBMS data takes the form of RTP/UDP/IP packets. An RTP/UDP/IP header includes many information fields such as protocol version, header length, service type, total length, packet ID, time to live (TTL), protocol ID, header checksum as CRC, IP addresses of a source and a destination, and UDP port number. The RTP/UDP/IP header is about 60 bytes in length, which is too large to be transmitted on a radio channel.

The RTP/UDP/IP header has a certain inclination. The header size can be reduced utilizing the inclination. A technique for reducing the header size by utilizing the inclination is header compression.

For example, IP addresses and UDP port numbers in an RTP/UDP/IP header for an MBMS service do not change during the MBMS service. These values are sent several times when the service starts and then no more. These header fields are called static header fields and stored in a static part of the context 315-2. The values of some fields including RTP SN (Serial Number) are changed in each packet, that is, incremented by 1 in each packet. These header fields are called dynamic header fields. The dynamic header fields are sent to a receiving side each time they are changed and stored in the dynamic part of the context 315-2.

The header compressor 315-1 compresses the header of a packet received from the CN 305 according to the context 315-2 and updates the context 315-2 on a packet stream basis. A packet stream is defined as a set of packets having the same static header fields. For example, one media component for one MBMS service can be a packet stream. The header compressor 315-1 can compress a plurality of packet streams, using a plurality of contexts. The contexts are identified by CIDs (Context Identifications). That is, one context includes a CID, a static part, and a dynamic part.

The header compressor 315-1, upon receipt of the first packet data of a packet stream for an MBMS service, initializes the static part and the dynamic part of the context 315-2 using the header fields of the packet data. After determining a CID to be used for the packet stream, the header compressor 315-1 sends to a header decompressor 345-5 of the UE 345 a plurality of times an initialization and refresh (IR) packet including information about the CID, the static part, and the dynamic part. The header decompressor 345-5 initializes its context 345-6 using the IR packets. That is, the static part and dynamic part information included in the IR packet is superimposed on a context 345-6.

After sending IR packets enough for the header decompressor 345-5 to initialize the context 345-6, the header compressor 315-1 starts to send data with a compressed header. The header compression is the process of sending the dynamic header fields only when they are changed, without the need of sending the static header fields. The header decompressor 345-5 adds the static header fields read from the static part of the context 345-6 to the received packet, decompresses the dynamic header fields of the received packet, and updates the context 345-6 with the decompressed header fields. In this way, both the header compressor 315-2 and the header decompressor 345-5 operate based on the contexts 315-2 and 345-6. The contexts 315-2 and 345-6 must be updated equally.

If at least one packet is lost between the header compressor 315-1 and the header decompressor 345-5, a discrepancy may occur between the contexts 315-2 and 345-6. The context discrepancy is mostly the discrepancy between the dynamic parts and in some cases, between the discrepancy between the static parts. To avoid the context discrepancy, the ROHC scheme sends an Initialization & Refresh (IR) packet including all information about the static and dynamic parts and an IR-DYN packet periodically. While the period of the IR/IR-DYN packet is not specified in the ROHC standard, RFC 3095, *"RObust Header Compression (ROHC): Framework and four profiles: RTP, UDP, ESP, and uncompressed",* it is usually much shorter than the transmission period of an IR packet.

Once context synchronization is acquired between the header compressor 315-1 and the header decompressor 345-5 through IR/IR-DYN packet-based initialization, the header compressor 315-1 sends headers with compressed headers and the header decompressor 345-5 decompresses the compressed headers using the context 345-6 including the same information as used for the header compression. The dynamic parts and static parts of the contexts 315-2 and 345-6 are synchronized periodically based on the IR/IR-DYN packet.

In the case where the single header compressor 315-1 processes a plurality of packet streams, contexts for the packet streams are identified by their CIDs. In the illustrated case of FIG. 3, the CID of the context 315-2 is *n*. The context 345-6 of the header decompressor 345-5 also has a CID of *n*.

Regarding resumed service reception at the UE 345 after moving from cell 1 335 to cell 2 340 during the course of an MBMS service, the UE 345 configures a PHY entity 345-1, a MAC entity 345-2, and a PDCP entity 345-4 for processing MBMS data as it moves from cell 1 335 to cell 2 340. At the same time, the UE 345 acquires system information broadcast periodically from cell 2, to thereby configure the entities 345-1 to 345-4.

Because the PDCP entity 315 is shared between cell 1 335 and cell 2 340 in the illustrated case of FIG. 3, the UE 345 reuses the RLC 345-3 and PDCP 345-4entities used for cell 1 335 without configuring new RLC and PDCP entities for cell 2 340. The UE 345 configures the new PHY 345-1 and MAC 345-2 entities for cell 2 340 because PHY and MAC entities are configured on a cell basis.

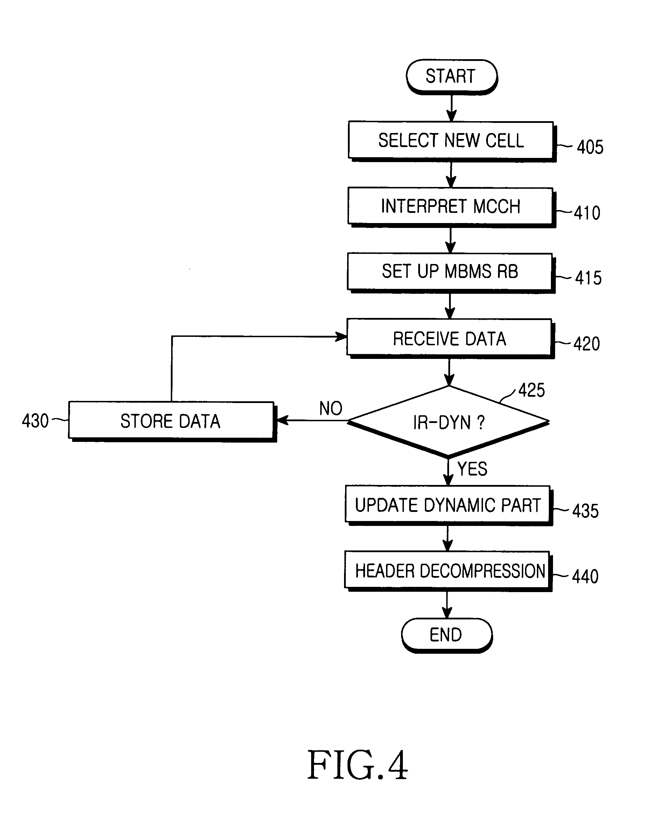

FIG. 4 is a flowchart illustrating an operation for resuming an MBMS service in a UE after the UE moves from one cell to another according to a preferred embodiment of the present invention. As illustrated in FIG. 3, both cells share the same PDCP entity.

Referring to FIG. 4, the UE 345 selects a new cell, cell 2 during receiving an MBMS service from cell 1 in step 405. The new cell can be selected in many ways and one of them will be addressed below.

The UE 345 periodically measures the strengths of radio signals received from neighbor cells. If the UE 345 detects a radio signal stronger than that of the current serving cell 335, it acquires information required to use an uplink common channel and a downlink common channel from cell 2 by interpreting a signal received on a BCH (Broadcast Channel) from cell 2 transmitting the detected radio signal. When the UE 345 is capable of using the common channels in cell 2 by the system information, it also receives information required to interpret an MCCH (MBMS Control Channel) on the BCH from cell 2. The MCCH is a common channel that broadcasts information associated with MBMS services available in cell 2.

In step 410, the UE 345 acquires a list of MBMS services available in cell 2 and MBMS RB configuration information by which the MBMS services are provided by interpreting an MCCH signal received from cell 2. The MBMS RB configuration information is needed to configure the PDCP, RLC, MC and PHY entities for processing an MBMS service.

The UE 345 establishes an MBMS RB for communications with cell 2 referring to the MBMS RB configuration information in step 415. The MBMS RB establishment is performed specifically by
- configuring a new PHY entity using PHY layer configuration information;
- configuring a new MAC entity using MAC layer configuration information;
- configuring a new RLC entity using RLC layer configuration information (If cell 2 shares the same RLC entity 345-2 with cell 1, the UE 345 reuses the RLC entity 345-2 used for cell 1); and
- configuring a new PDCP entity using PDCP layer configuration information (If cell 2 shares the same PDCP entity 345-4 with cell 1, the UE 345 reuses the PDCP entity 345-4 used for cell. The UE 345 can determine whether cell 1 and cell 2 share the same PDCP entity 345-4 by a PDCP entity ID received from the RNC on the MCCH).

That is, the UE 345 reuses the PDCP entity 345-4 for cell 2 in step 415. Therefore, it also reuses the header decompressor 345-5 and context 345-6 of the PDCP entity 345-4.

In step 420, the UE 345 receives packet data of the MBMS service from cell 2 through the configured MBMS RB. Since the packet data has a header compressed by the header compressor 315-1 as in cell 1, the UE 345 decompresses the compressed header of the packet data reusing the context 345-6 used for cell 1.

Packet loss that may occur during RPHC header compression/dccompression in the UE 345 as it moves from cell 1 to cell 2 can lead to loss of dynamic part synchronization.

For example, the RTP SN of the dynamic part is delivered typically in four LSBs (Least Significant Bits) through header compression. Therefore, if eight or more packets are lost, header decompression fails. For an RTP SN of "1101 1111 0000 1001", the header compressor 315-1 sends only the last four bits "'1001". Upon receipt of "1001", the header decompressor 345-5 replaces the last four bits of an RTP SN stored in the context 345-6 with the received four bits, thereby recovering the RTP SN.

Despite loss of packets from the header compressor 315-1, the header compressor 315-1 sends only the last bits "0010" for an RTP SN of "1101 1111 0001 0010" for the next packet, not recognizing the packet loss. The header decompressor 345-5 decompresses the RTP SN to "1101 1111 0000 0010", thereby failing in header decompression.

Aside from the RTP SN, the dynamic part has other dynamic header fields that can be affected by the packet loss. For example, since IPv6 Hop Limit is changeable in the course of a session, the loss of a packet including the change information leads to failure of subsequent header decompressions. Therefore, to update the dynamic part of the context 345-6, the UE 345 first receives an IR-DYN packet and resumes header decompression after moving to cell 2. The reason For using the IR-DYN packet is that the IR-DYN packet is more frequently sent than an IR packet.

Since the IR-DYN packet is sent periodically, the UE 345 suspends header decompression until receiving the IR-DYN packet from cell 2 in step 425. Upon receipt of the IR-DYN packet, the UE 345 proceeds to step 435, otherwise, it goes to step 430.

While not shown in FIG. 4, the UE 345 can await receipt of a packet including RTP SN information of a sufficient size instead of the IR-DYN packet in step 425. Specifically, while the IR-DYN packet includes all of the dynamic part including the RTP SN, another updating packet such as a UOR-2 packet selectively includes part of the dynamic part. For example, to allow updating of the RTF SN which is most frequently variable in the dynamic part, the header compressor 315-1 can send an RTO SN updating packet shorter than the IR-DYN packet in a shorter period. In this embodiment, if the UE 345 acquires RTP SN synchronization by the RTP SN updating packet, it goes to step 435. It will be described below that the UE 345 awaits receipt of the IR-DYN packet in step 425 in one embodiment of the present invention and receipt of the RTP SN updating packet in step 425 in another embodiment of the present invention.

In step 430, the UE 345 stores the received data for later recovery, since header decompression cannot be performed because the context 345-6 has not been updated yet, and then returns to step 420. When determined that the data is unnecessary, the UE 345 can delete the data. The receiving and storing (or deleting) operation is repeated until receipt of the IR-DYN packet in the first embodiment, and until receipt of the RTP SN updating packet in the second embodiment.

In step 435, the UE 345 updates the dynamic part of the context 345-6 using the IR-DYN packet in the first embodiment of the present invention. Since the IR-DYN packet covers all the dynamic header fields for the dynamic part of the context 345-6, the UE 345 superimposes the dynamic header fields of the IR-DYN packet on the dynamic part of the context 345-6.

In the second embodiment of the present invention, the UE 345 updates the RTP SN in the dynamic part using the RTP SN included in the RTP SN updating packet in step 435.

In step 440, the UE 345 decompresses the header of subsequent packet data using the updated context 345-6. In the presence of packet data stored without header decompression in step 430, the headers of the packet data are first decompressed using the updated context 345-6.

In accordance with the present invention, as a UE moves from an old cell to a new cell, both cells sharing the same PDCP entity, the UE updates the dynamic part of a header decompression context by receiving an IR packet and then resumes header decompression. Therefore, header decompression failure is minimized and adverse effects of the header decompression failure can be suppressed.

While the invention has been shown and described with reference to certain preferred embodiments thereof, it will be understood by those skilled in the art that various changes in form and details may be made therein without departing from the spirit and scope or the invention as defined by the appended claims.

## Claims

1. A method of resuming header decompression in a user equipment (UE) in a multimedia broadcast/multicast service (MBMS) mobile communication system, comprising the steps of:
move from an old cell to a new cell during receiving an MBMS service;
awaiting receipt of an initialization and refresh dynamic (IR-DYN) packet for header decompression of packet data for the MBMS service, before resuming header decompression in the new cell;
updating a header decompression context used for the old cell using the IR-DYN packet, upon receipt of the IR-DYN packet; and
decompressing a header of packet data for the MBMS service received from the new cell using the updated header decompression context.

2. The method of claim 1, further comprising, upon receipt of packet data for the MBMS service other than the IR-DYN packet before receiving the IR-DYN packet, storing the received packet data for header decompression after updating the header decompression context.

3. The method of claim 1, wherein the moving step comprises the steps of:
receiving radio bear (RB) configuration information for the MBMS service on an MBMS control channel (MCCH) from the new cell;
determining whether the new cell shares a header compressor and a header compression context with the old cell according to the RB configuration information; and
reusing the header compressor and the header compression context for the new cell, if the new cell shares the header compressor and the header compression context with the old cell.

4. The method of claim 1, wherein the updating step comprises replacing a dynamic part of the header decompression context with dynamic header fields included in the IR-DYN packet.

5. A method of resuming header decompression in a user equipment (UE) in a multimedia broadcast/multicast service (MBMS) mobile communication system, comprising the steps of:
move from an old cell to a new cell during receiving an MBMS service;
suspending decompression of a header of packet data for the MBMS service received from the new cell until receiving an updating packet including updating information for header decompression of the packet data from the new cell;
updating a header decompression context used for the old cell using the updating packet, upon receipt of the updating packet; and
decompressing the header of the packet data using the updated header decompression context.

6. The method of claim 5, further comprising, upon receipt of packet data for the MBMS service before receiving the updating packet, storing the received packet data for header decompression after updating the header decompression context.

7. The method of claim 5, wherein the step comprises the steps of:
receiving radio bear (RB) configuration information for the MBMS service on an MBMS control channel (MCCH) from the new cell;
determining whether the new cell shares a header compressor and a header compression context with the old cell according to the RB configuration information; and
reusing the header compressor and the header compression context for the new cell, if the new cell shares the header compressor and the header compression context with the old cell.

8. The method of claim 5, wherein the updating step comprises replacing an RTP SN (Realtime Transport Protocol Serial Number) of the header decompression context with an RTP SN included in the updating packet.
